Europäisches Patentamt

European Patent Office

Office européen des brevets

(19)

(11) EP 0 731 347 A1

(12) EUROPEAN PATENT APPLICATION

(43) Date of publication:
11.09.1996 Bulletin 1996/37

(51) Int. Cl.$^6$: G01K 1/02

(21) Application number: 96103060.8

(22) Date of filing: 29.02.1996

(84) Designated Contracting States:
DE ES FR GB IT SE

(30) Priority: 08.03.1995 IT TO950055 U

(71) Applicant: BITRON S.p.A.
I-10064 Pinerolo (Torino) (IT)

(72) Inventors:
• Lo Re, Renato
10098 Rivoli, Torino (IT)
• Gallicet, Stefano
10052 Bardonecchia, Torino (IT)

(74) Representative: Lotti, Giorgio et al
c/o Ing. Barzanò & Zanardo Milano S.p.A.
Corso Vittorio Emanuele II, 61
10128 Torino (IT)

(54) A temperature control and/or measurement system of an auto-vehicle

(57) A system for measuring and/or controlling the temperature of a motor vehicle internal combustion engine or its coolant. A sensor detects the engine and/or coolant temperature and transmits a signal of the temperature value to a microcontrol unit (MP). The sensor (S) comprises means for monitoring the engine and/or coolant temperature and producing a first analog signal having an amplitude proportional to the measured temperature, and a circuit for pulse duty cycle modulation. In response to the first signal, the circuit provides a second signal having a duty cycle proportional to the detected temperature. The second signal is transmitted from the sensor (S) to the microcontrol unit (MP) in digital form with duty cycle modulation proportional to the measured temperature analog value. The transmission between sensor (S) and microcontrol unit (MP) is realised in series, without any interface.

FIG. 4

## Description

The present invention refers to a system for controlling and/or measuring the temperature of a motor vehicle internal combustion engine or its coolant, of the kind according to the preamble of claim 1.

It is known that all endothermic engines require a cooling system capable of stabilising the engine operation temperature at an ideal value.

For this purpose, especially in the automobile field, there are in use two types of cooling systems. One is the air cooling system, which has fewer applications, the other is the water cooling system, which is the most widely used. Such cooling systems are operated on the basis of the measurement results obtained through engine or engine coolant temperature sensors in order to allow certain operations of the cooling system and perform required functions (for instance activate the cooling fan).

At present, for this purpose it is also known that suitable control units are provided equipped with a digital microcontrol unit, to which said sensors are connected through suitable transmission means (channels). Said cooling system control units are usually further connected to additional control units which need, for their own proper operations, information related to the engine temperature (as for example the electronic injection system control unit, the board computer control unit, the air conditioning system control unit, etc.).

Currently available cooling systems for motor vehicle engines use bimetal sensors or sensors of the PTC (Positive Temperature Coefficient) or NTC (Negative Temperature Coefficient) type, which suffer from some drawbacks.

The first type of sensors has the disadvantage of having mobile mechanical parts, thereby being scarcely reliable, and provides an ON/OFF type of output signal which has few possibilities of being utilized and processed as such in order to attain satisfactory regulation accuracy.

The second type sensors, which provide an analog output, provide instead a very high resolution. However, being analog devices, these sensors need more complex and expensive circuits than the ones used for bimetal sensors in order to have the readings analyzed by the microcontrol units.

In fact, since the microcontrol units are able to process information only in digital form, it is obvious that, in order to be processed, an information read in analog form (as it is the one provided by a PTC or a NTC temperature sensor) needs to be converted into digital form. Generally, this is achieved by means of a suitable analog-to-digital converter device (A/D converter).

Such a converter device may be inserted on the transmission channel close to the temperature sensor or close to or integrated in the microcontrol unit of the cooling system.

In case the analog-to-digital converter is placed close to the temperature sensor, the signal is immediately converted to digital or numeric form, before being transmitted through the transmission channel. Therefore, the signal is not affected by disturbances, which are always present in the communication channel, and the signal quality (expressed by the signal/disturbances ratio) is definitely good.

On the other hand, however, placing the A/D converter close to the temperature sensor (therefore far away from the system electronic control unit, which is usually placed in a remote position) requires additional room which is usually in contrast with the lack of space inside a vehicle engine compartment. In addition, the A/D converter might be affected by the engine temperature which could cause malfunctions.

The other possible solution is to place the analog-to-digital converter close to the electronic control unit, or to make it integral with the microcontrol unit.

In this way the signal from the temperature sensor, either of PTC or NTC type, goes through the transmission channel in analog form: in doing so, however, the signal arrives to the A/D converter after its original value has been influenced by the noise and disturbances always present in the transmission channel. The consequence is that such disturbances will also be converted and will cause a certain temperature measurement error rate.

In this case it is possible to use a microcontrol unit with an internal A/D converter in order to reduce the overall dimensions. However, as said above, the resultant processed signal will be modified if compared with the one originally registered by the sensor and therefore the temperature measurement will be affected by an error rate proportional to the value of the disturbances.

Obviously the ideal solution would be to have a temperature sensor placed very close to the electronic control unit, in order to reduce the transmission channel length and relevant disturbances to a minimum to be able to use a microprocessor with an internal A/D converter.

According to the current knowledge, the above arrangement is not practical since in motor vehicle applications there is little room available to allocate a control unit close to the engine. Furthermore, the temperature range (in this case the cooling water and the engine compartment heat) will not allow proper operation of the control unit board electronics, and will damage or alter data processing. The only solution is therefore to place the sensor in the position where the temperature is to be detected and then send this datum to a remotely positioned control unit.

The object of present invention is to solve the above mentioned problems and particularly to disclose an engine and/or coolant temperature control system for internal combustion engines which will improve the currently available systems.

The above and other objects are accomplished by the provision of a system as claimed in claim 1.

In order that the present invention may be well understood there will now be described a few preferred embodiments thereof, given by way of example, reference being made to the accompanying drawings, in which:

Figure 1 is a schematic diagram of a typical analog signal curve;
Figure 2 is a schematic diagram of a typical digital or numeric signal output;
Figure 3 is a schematic diagram of an analog signal represented in numeric, discrete form along the ordinate axis;
Figure 4 is a schematic diagram of a basic working diagram of the system according to the present invention;
Figure 5 is a schematic diagram of an analog signal transformed in a digital, duty cycle modulation or pulse width modulation (PWM) signal.

At the basis of the present invention, there are the following considerations:

- a temperature sensor for said application should have an analog temperature reading system in order to attain a high resolution measuring system;
- transmission of the temperature value to the control unit microprocessor should be in digital form for ease of use;
- operation controlled by the microcontrol unit should also be of digital kind, of the ON/OFF type, and should be used for the actuators (e.g. the fan) which are part of the cooling system;
- the temperature value information should be transmitted in digital form to the other control units on board the vehicle

In view of the above, it is clear that in order to achieve the above mentioned features, it would be desirable to have a temperature sensor with an inner A/D converter, so that the reading could be transmitted in numeric form, which would be the exact value of the detected physical quantity without the risk of such value being affected by disturbances. In this way, the above mentioned advantages concerning disturbances prevention could be attained, as well as space saving by avoiding to put another integrated circuit (A/D converter) close to the sensor.

However, even the transmission in digital form could bring some problems because of the need to have suitable interfaces for signal transmission.

According to the invention, the temperature value reading detected by the sensor is transmitted to the microcontrol unit in digital form, the duty cycle modulation being proportional to the analog value of the measured temperature.

Before going into a detailed description of the proposed technical solution, it is necessary to clarify the difference between analog and numeric or digital signals having duty cycle modulation or PWM.

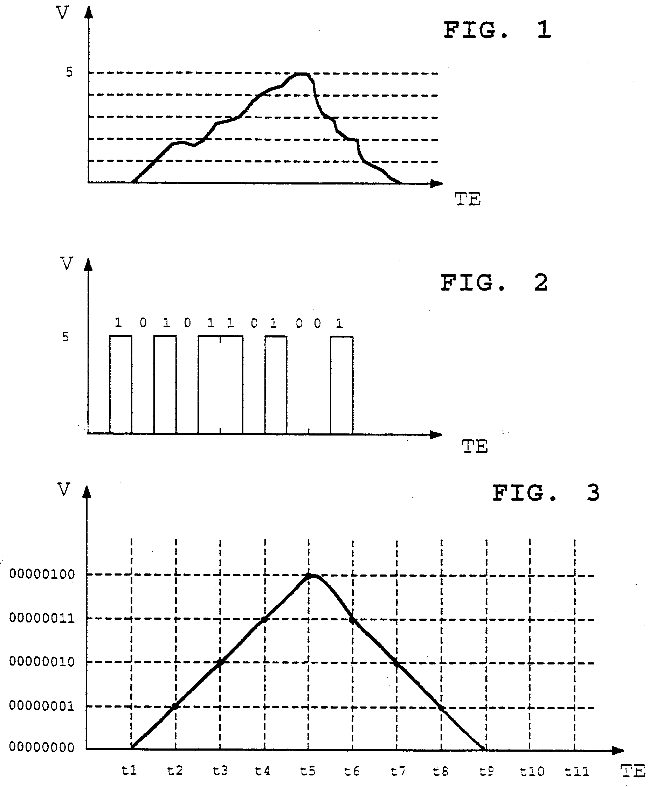

An analog electric signal is a signal that varies in time, and it is an entity which can assume infinite values. In the temperature sensor case, this entity is a voltage, which can have a readout of the kind shown in Figure 1, wherein the x-axis carries the temperature values (TE) and the y-axis carries the voltage values (V) in Volt.

As said before, in the present type of application this kind of signal needs means for analog-to-digital conversion, but which involve the above mentioned problems. On the other hand, a numeric or digital signal is a signal formed only by two well defined voltage values (finite states), corresponding to the ON/OFF (generally +5 V and 0 V) states represented in Figure 2. A logic value corresponding to "1" is associated to the positive voltage ON, a logic value corresponding to "0" being associated to the zero voltage OFF.

In order to transform the analog signal in a numeric or digital signal it is necessary to quantify the time axis through suitable samples and divide the voltage axis in discrete intervals through suitable thresholds. In this way it is possible to obtain on the y-axis, at well defined points in time, a numeric value expressed by a numeric string (BYTE), formed by "1"s (+5 V) and "0"s (0 V), as shown in Figure 3.

After this example, the improved behaviour of the digital signals should become evident as to the reaction to noise disturbances (usually of a few hundreds of millivolts). In fact, even though the noise overlaps the digital signals, it will not be able to change their values, as "1"s will remain "1"s and "0"s will remain "0"s.

The so converted signal can be sent to the microprocessor, which in this case does not need an A/D converter, in two modes, i.e. in parallel or series.

Connection in parallel requires a high number of wires and it is therefore disadvantageous from an assembly standpoint. Connection in series can limit the number of wires to two, but with the complication of having to provide an interface for the serial connection fitted on the sensor itself. This renders the system more expensive and increases overall dimensions.

On the other hand, the system according to the present invention provides all the typical analog system advantages concerning disturbance immunity, as well as analog system advantages concerning transmission in series and therefore saves costs and does not need an interface.

According to the present invention, the temperature value reading registered by the sensor is transmitted to the microcontrol unit in digital form with duty cycle modulation proportional to the measured temperature analog value.

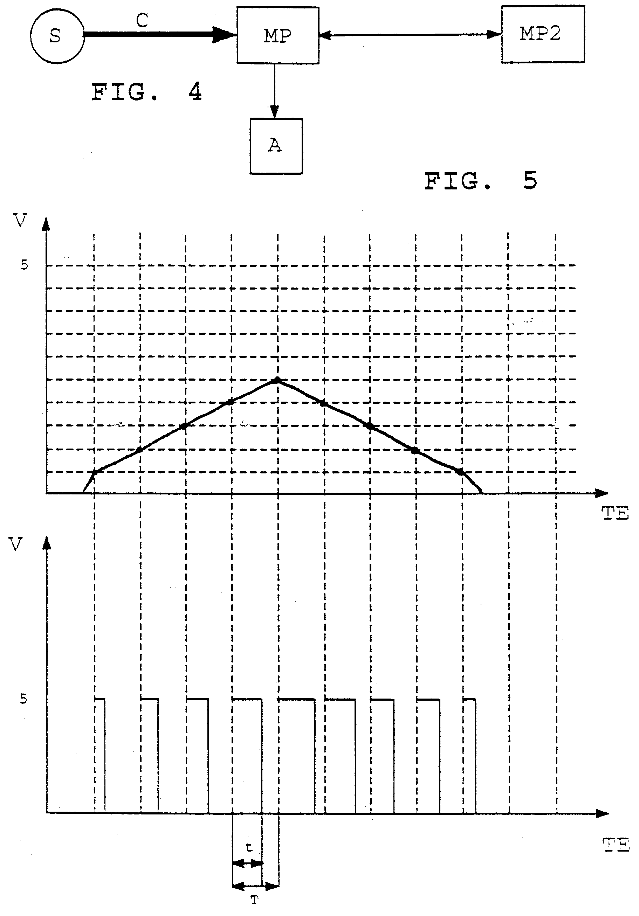

Figure 4 schematically shows a cooling system according to the present invention.

In Figure 4, S indicates an engine or coolant temperature sensor, the digital output signal having duty cycle modulation or PWM (Pulse Width Modulation).

Sensor S includes both the temperature sensor means and a signal generating circuit (with duty cycle proportional to the measured temperature). Sensor S is contained in a suitable housing (not shown) located in the most suitable position for the temperature reading (of the engine or its coolant).

Reference C indicates a serial transmission channel connecting sensor S to the microprocessor of a control unit MP for controlling the cooling system. A indicates an actuator belonging to the system, such as for example a fan, controlled by control unit MP. MP2 indicates an additional control unit (e.g., the electronic injection control unit) which uses the information coming from sensor S for its own operation.

A digital signal with duty cycle modulation or PWM is a signal for which there are only two allowed voltage values (ON and OFF), wherein between one sampling interval and the other the signal duty cycle time at the nominal or output value is proportional to the voltage value provided by the sensor.

This concept is shown in the diagram of Figure 5. The upper part of the diagram shows the curve associated to an analog signal, while in the lower part of the diagram shows the corresponding digital signal of PWM type.

It should be noted that a PWM signal is a square wave signal with periodic positive pulses (ON) alternated with periods characterized by signal absence (OFF). The sampling frequency is constant, but the positive pulses duty cycle changes according to the represented signal amplitude (temperature signal, in our case): as pulse duration increases, the time period without signal decreases proportionally, and viceversa.

In other terms, since the sampling complete cycle period is constant, when the ON positive pulse duration changes in one direction, duration of the OFF period has to change in the opposite direction.

The PWM signal has a duty cycle equal to the ratio of each positive pulse duration and a complete cycle duration.

Therefore, with reference to Figure 5, if T indicates the sampling period and t indicates the signal duration time, the duty cycle can be defined as the $t/T$ ratio.

In practice, therefore, as an analog signal increases in amplitude, a variable duty cycle signal increases its signal duration time.

Referring again to Figure 5, the sensor S with a PWM output signal, according to the application of this invention, may for example, comprise a commercially available SMT 160-30 integrated circuit, produced by SPRAGUE. The integrated circuit has three terminals, two of which are utilized for the 5 Volt feeding, and the third one is utilized for the output signal exit. The output signal is a square wave, with a duty cycle function of the temperature according to the following formula :

$$\text{Duty cycle} = 0{,}320 + 0{,}00470 \cdot TE$$

wherein TE is the measured temperature in degrees centigrade.

In further detail, said SMT 160-30 sensor comprises both analog temperature (TE) sensor means and a pulse duty cycle modulator circuit. This circuit is capable of developing, in response to the analog signal representative of TE, a second signal having a duty cycle proportional to the same measured temperature. In other words, such sensor is further capable of transmitting a digital output signal, with duty cycle modulation proportional to the measured temperature analog value.

The output of sensor S is capable of driving an electronic control unit located up to 20 meters away, without the need to reset the signal. This characteristic makes the proposed solution particularly suitable for the automotive field applications where, as already stated, the control unit and the related sensor have to be necessarily remote from each other.

This signal processing system, which might be considered "pseudo numeric" (as the amplitude is digital but the conduction time t may assume infinite values) might seem, at first sight, more complicated to handle than a numeric signal.

On the contrary, in the case of the herein proposed application, the method according to the present invention is able to obtain some important advantages.

Undoubtedly, the first advantage is due to the fact that the pulse duty cycle modulation signal PWM, i.e. digital signal with duty cycle modulation, is not affected by disturbances nor by noise, as long as disturbances do not reach an amplitude proximate to the signal itself. Immunity to disturbances is typical of plain digital signals, in which case there is no need for a traditional analog-to-digital converter.

Another advantage is that the PWM signal can be easily transmitted in series through the C channel, without having to add a parallel/serial interface to sensor S, since the same microcontrol unit is able, using its own timer, to sample the time axis with excellent resolution and reconstruct the signal clock by determining, for example, the frequency with which the positive signal representing a new pulse is repeated following the period of no signal. As a consequence, the microcontrol unit can get the temperature information from the received PWM signal. A further advantage lies in that the system according to the invention gives a more precise voltage reading. In fact, even an inexpensive microprocessor has a timer capable of sampling the time axis with excellent resolution and recreating the PWM reading signal even though it was not sent by means of a suitable interface. On the contrary, unless high resolution microprocessor are used, the 8 bit analog-to-digital converter of an inexpensive microprocessor has the first two bits greatly affected by noise, whereby they are not very reliable.

Further, it is clear that the possibility of connecting directly the PWM output signal of the sensor to the microprocessor reduces the number of components and the overall dimension of the system, and consequently reduces the final cost of the system.

For applications in which more than one sensor is needed, such sensors can easily be interfaced by means of a cheap digital multiplexer.

Another significant advantage of the invention is that the PWM signal can be reconverted to an analog signal, for other possible uses, at a very low cost. For this purpose, a condenser and a few suitable resistors can restore a voltage proportional to the conduction time t.

## Claims

1. A system for measuring and/or controlling the temperature of a motor vehicle internal combustion engine or its coolant, the system comprising a sensor capable of detecting the engine and/or coolant temperature, said sensor (S) transmitting a signal of the temperature value to a microcontrol unit (MP), characterized in that said sensor (S) device comprises means for monitoring the engine and/or coolant temperature and producing a first analog signal having an amplitude proportional to the measured temperature, and a circuit for pulse duty cycle modulation, said circuit being capable of producing, in response to said first signal, a second signal having a duty cycle proportional to the detected temperature, said second signal being transmitted from said sensor (S) to said microcontrol unit (MP) in digital form with duty cycle modulation proportional to the measured temperature analog value, the transmission between sensor (S) and microcontrol unit (MP) being realized in series, without any interface.

2. A system according to claim 1, characterized in that said microcontrol unit (MP) reads the data received in digital form with duty cycle modulation from said sensor (S) and reconstructs the time basis according to which said data have been codified and transmitted.

3. A system according to claim 2, characterized in that said time basis reconstruction is obtained by analyzing the points in time when digital signal pulses start again after a signal absence period.

4. A system according to claim 1, characterized in that said microcontrol unit (MP) obtains the engine and/or coolant temperature value through a formula of the type: $DT = X1 + X2xT$, wherein DT is the duty cycle modulation, X1 is a constant, X2 is a second constant, T is the temperature value.

5. A system according to claim 1, characterized in that said sensor (S) is contained in a suitable housing.

6. A system according to claim 1, characterized in that said microprocessor is part of a control unit (MP) of the engine cooling system, said control unit controlling operation of suitable actuators (A) in response to the temperature value received from said sensor (S).

7. A system according to claim 6, characterized in that said control unit (MP) is connected to at least another control unit (MP2) exploiting the temperature information coming from said sensor (S).

8. A system according to any of the preceding claims, characterized in that the temperature signal from said sensor (S) is reconverted to analog form by means of a condenser and suitable resistors.

9. A system according to any of the preceding claims, characterized in that there is provided a plurality of said sensors (S) interfaced by means of a digital multiplexer.

10. A system according to any of the preceding claims, characterized in that said sensor is an SMT 160-30 type integrated circuit.

FIG. 1

FIG. 2

FIG. 3

FIG. 4

FIG. 5

## EUROPEAN SEARCH REPORT

| | European Patent Office | | Application Number |
|---|---|---|---|
| | | | EP 96 10 3060 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 128 283 (BOSCH GMBH ROBERT) 19 December 1984 <br> * claim 1; figures * <br> --- | 1 | G01K1/02 |
| X | DE-A-23 56 837 (YOKOGAWA ELECTRIC WORKS LTD) 22 May 1974 <br> * the whole document * <br> --- | 1,2,4 | |
| X | RADIO FERNSEHEN ELEKTRONIK, vol. 41, no. 3, 1 January 1992, pages 196-200, XP000294715 KUHNE H: "ANWENDUNGEN EINES NEUARTIGEN TEMPERATURSENSORS" <br> * the whole document * <br> --- | 1-4,8-10 | |
| X | ELEKTOR ELECTRONICS, vol. 18, no. 202, 1 July 1992, pages 78-79, XP000318533 "SMARTEC TEMPERATURE SENSOR" <br> * the whole document * <br> --- | 1,2,4,10 | |
| X | FUNKSCHAU, no. 20, September 1984, MUNCHEN DE, pages 72-73, XP002004879 ANONYMOUS: "GEHORSAMER TEMPERATURFUHLER" <br> * the whole document * <br> ----- | 1,2,9 | TECHNICAL FIELDS SEARCHED (Int.Cl.6) <br><br> G01K |

The present search report has been drawn up for all claims

| Place of search | Date of completion of the search | Examiner |
|---|---|---|
| THE HAGUE | 6 June 1996 | Ramboer, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)